(19) Europäisches Patentamt / European Patent Office / Office européen des brevets

(11) **EP 3 182 420 A1**

(12) **DEMANDE DE BREVET EUROPEEN**

(43) Date de publication:
21.06.2017 Bulletin 2017/25

(51) Int Cl.:
*H01B 9/00* (2006.01)

(21) Numéro de dépôt: **16200917.9**

(22) Date de dépôt: **28.11.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **16.12.2015 FR 1562514**

(71) Demandeur: **SNCF Mobilités**
**93200 Saint-Denis (FR)**

(72) Inventeurs:
• **GOERES, David**
**72000 LE MANS (FR)**
• **FRUGIER, Didier**
**72100 LE MANS (FR)**

(74) Mandataire: **Pontet Allano & Associes**
**Parc Les Algorithmes, Bâtiment Platon**
**CS 70003 Saint-Aubin**
**91192 Gif-sur-Yvette Cedex (FR)**

(54) **CÂBLE ELECTRIQUE POUR L'ALIMENTATION HAUTE-TENSION D'UN EQUIPEMENT FERROVIAIRE, ET EQUIPEMENT FERROVIAIRE EQUIPE D'UN TEL CÂBLE**

(57)     L'invention concerne un câble électrique (300) pour transporter un signal électrique haute tension d'alimentation d'un équipement ferroviaire (310), en particulier un câble de toiture d'un équipement ferroviaire roulant (310), ledit câble (300) comprenant :
- au moins une âme conductrice (302) pour transporter ledit signal électrique, et
- au moins une couche (304), électriquement isolante, disposée autour de ladite âme conductrice (302) ; caractérisé en ce que ledit câble électrique (300) ne comporte pas de couche de blindage.
    Elle concerne également un équipement ferroviaire (310) muni d'un tel câble électrique (310), en particulier un véhicule ferroviaire.

**FIG. 3**

EP 3 182 420 A1

**Description**

L'invention concerne un câble électrique pour l'alimentation haute-tension d'un équipement ferroviaire. Elle concerne également un équipement ferroviaire, muni d'un tel câble d'alimentation.

Le domaine de l'invention est le domaine des câbles d'alimentation d'un équipement ferroviaire, de type train ou tramway ou métro, par un signal électrique haute-tension.

**Etat de la technique**

Tout système alimenté par une infrastructure électrique délivrant un signal électrique haute tension comprend un ou des filtres électriques connectés à l'interface entre le système et l'infrastructure, en vue d'atténuer les harmoniques de courants générés par le système électrique dans l'infrastructure. Par exemple, les harmoniques de courants générés par un train sur l'infrastructure alimentant le train sont atténuées par un filtre connecté électriquement au pantographe du train.

Le filtre atténuateur d'harmoniques est constitué de composants connectés électriquement à l'infrastructure électrique délivrant le signal haute tension et dont le volume, le poids et le coût dépendent des grandeurs électriques délivrées par l'infrastructure. De ce fait, les composants du filtre sont coûteux, volumineux et lourds. A titre d'exemple, le filtre atténuateur utilisé dans une locomotive présente un poids d'environ une tonne.

Il existe des solutions alternatives pour diminuer le volume, le poids et le coût du filtre atténuateur d'harmoniques. Par exemple, le document EP 1 126 573 décrit une solution permettant d'utiliser des composants plus petits et plus légers, mais nécessitant tout de même des composants de compensation.

Par conséquent, chacune des solutions connues à ce jour nécessite l'utilisation de composants de compensation et impose, par conséquent, des surcoûts lors de la conception et lors de la maintenance. De plus, une défaillance de ces composants de filtrage peut induire des dysfonctionnements graves sur l'équipement et sur l'infrastructure du fait que la résonance électrique réapparait et/ou le niveau harmonique émis par l'équipement augmente.

L'invention a pour but de pallier les inconvénients précités.

Notamment, le but de l'invention est de proposer une solution pour l'atténuation d'harmoniques créées par un équipement alimenté par un signal électrique moins coûteuse, moins volumineuse et nécessitant moins de maintenance.

Enfin, un autre but de l'invention est de proposer une solution pour l'atténuation d'harmoniques créées par un équipement alimenté par un signal électrique, ne nécessitant pas de composants de compensation.

**Exposé de l'invention**

L'invention permet d'atteindre au moins l'un des buts précités par un câble électrique pour transporter un signal électrique haute tension d'alimentation d'un équipement ferroviaire, en particulier câble de toiture d'un équipement ferroviaire roulant, ledit câble comprenant :

- au moins une âme conductrice pour transporter ledit signal électrique, et
- au moins une couche, électriquement isolante, disposée autour de ladite âme conductrice ;

caractérisé en ce que ledit câble électrique ne comporte pas de couche de blindage.

Ainsi, l'invention propose d'utiliser un câble d'alimentation ne comportant pas de couche de blindage intégrée audit câble, ou solidaire dudit câble. Un tel câble est moins coûteux à fabriquer, est plus léger, et présente un diamètre plus petit comparé aux câbles de l'état de la technique.

De plus, comme le câble ne comporte pas de couche de blindage, la capacité linéique dudit câble est supprimée sans adjonction de composants électriques de compensation, ce qui permet de diminuer encore plus le coût, le poids et le volume de la solution proposée par l'invention.

Un câble de l'état de la technique comportant une couche de blindage séparée d'une âme conductrice par une couche isolante se comporte comme une capacité linéique, représentée par un condensateur de valeur C disposé entre le conducteur et la couche de blindage. L'impédance équivalente créée par cette capacité linéique est égale à $\dfrac{1}{2.\pi.f.C}$, avec C la valeur de la capacité linéique en Farad et f est la fréquence en Hertz du signal électrique transporté. Cette capacité linéique du câble forme un circuit résonnant LC avec l'inductance L de l'infrastructure électrique dans laquelle se trouve le câble électrique, la fréquence de ce circuit résonnant dépendant directement des valeurs de L et C. Un tel circuit résonnant LC amplifie les harmoniques présentes dans l'infrastructure en fonction de sa fréquence de résonance.

Le fait de supprimer la couche de blindage dans le câble selon l'invention, permet de supprimer, du moins diminuer au maximum, la capacité linéique C du câble et donc son effet amplificateur sur les harmoniques, et ce sans utilisation de composants additionnels.

L'âme conductrice peut être réalisée par tout conducteur électrique, sous la forme d'un ou plusieurs fils électriques, par exemple un fil en cuivre ou en un alliage de cuivre.

Un exemple de conducteur peut être un fil électrique réalisé en cuivre ou en un alliage de cuivre.

La couche isolante peut par exemple être réalisée en plastique ou silicone.

Avantageusement, le câble selon l'invention peut en outre comprendre une gaine de protection, disposée autour de la couche isolante. Cette gaine de protection a pour fonction de protéger le câble contre les agressions extérieures. Cette gaine de protection constitue une protection contre les sollicitations mécaniques et/ou les agressions chimiques (produits lessiviels, etc.).

La gaine de protection peut être réalisée en un matériau plastique de résistance mécanique et/ou chimique plus élevée comparée à celle du matériau plastique utilisé pour réaliser la couche isolante.

Par exemple, la gaine de protection peut présenter une épaisseur comprise entre 5mm et 10mm.

Avantageusement, la gaine de protection peut être électriquement non-conductrice. Autrement dit, la gaine de protection peut être isolante.

Le câble selon l'invention peut être utilisé pour transporter un signal électrique, pour alimenter l'équipement ferroviaire. En particulier, le câble selon l'invention peut être utilisé comme câble de toiture dans un équipement ferroviaire roulant.

Suivant un autre aspect de l'invention, il est proposé un équipement ferroviaire muni d'un câble électrique selon l'invention, pour transporter un signal d'alimentation haute-tension dudit équipement.

Dans une version avantageuse, l'équipement ferroviaire peut comprendre un capot de protection, disposé autour dudit câble, et fixé audit équipement.

Le capot de protection a pour fonction de protéger le câble contre les agressions extérieures. Dans ce mode de réalisation, le câble électrique selon l'invention peut ne pas comprendre une gaine de protection, ce qui diminue encore plus le diamètre dudit câble.

Avantageusement, le capot de protection peut être réalisé en un matériau électriquement conducteur.

Ainsi, un tel capot apporte un blindage électrique autour du câble d'alimentation.

Suivant un exemple de réalisation non limitatif, le capot peut être réalisé en acier.

Avantageusement, le capot peut comporter au moins un moyen de fixation dudit capot sur ledit équipement. Un tel moyen de fixation peut comprendre une ou plusieurs vis permettant de visser le capot sur une face de l'équipement, ou une ou plusieurs ouvertures prévues pour accueillir de telles vis.

L'équipement ferroviaire selon l'invention peut être alimenté par un signal haute-tension de valeur supérieure ou égale à 750V, en particulier égale à 750V, ou 1500V, ou 3000V, ou encore 15kV ou encore 25kV.

L'équipement selon l'invention peut préférentiellement être un équipement ferroviaire roulant, tel que par exemple une locomotive, une motrice, une voiture ferroviaire, une voiture de train ou une voiture de tramway, en particulier alimenté par une caténaire.

Dans ce cas, le câble électrique selon l'invention peut être, au moins en partie, un câble de toiture dudit équipement roulant.

**Rescription des figures et modes de réalisation**

D'autres avantages et caractéristiques apparaîtront à l'examen de la description détaillée d'exemples nullement limitatifs, et des dessins annexés sur lesquels :

- la FIGURE 1 est une représentation schématique d'un câble électrique de l'état de la technique utilisé comme ligne de toiture dans un train ;
- la FIGURE 2 est une représentation schématique du circuit électrique équivalent obtenu avec le câble de la FIGURE 1 ;
- la FIGURE 3 est une représentation schématique d'un premier mode de réalisation d'un câble électrique selon l'invention utilisé comme ligne de toiture dans un train ;
- la FIGURE 4 est une représentation schématique d'un deuxième mode de réalisation d'un câble électrique selon l'invention utilisé comme ligne de toiture dans un train ; et
- la FIGURE 5 est une représentation d'une infrastructure ferroviaire mettant en oeuvre un équipement et un câble selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

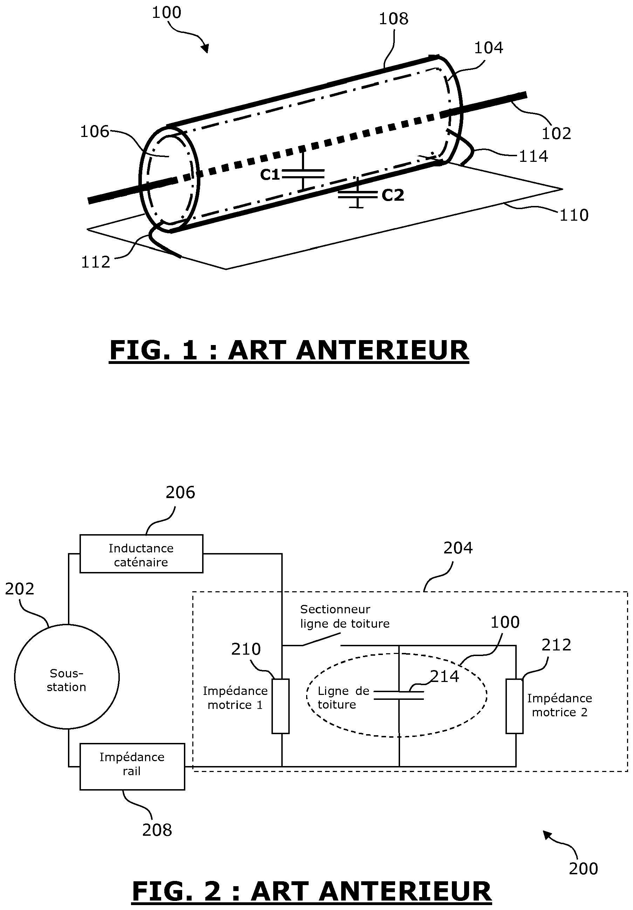

La FIGURE 1 est une représentation schématique d'un câble de toiture d'un train utilisé pour alimenter le train et les composants du train avec un signal électrique haute tension à courant variable.

Le câble 100 représenté sur la FIGURE 1, est une ligne de toiture pour train alimentant le train à partir d'une caténaire.

Le câble 100 comprend :

- une âme conductrice 102, par exemple un fil de cuivre ;
- une couche de blindage 104, également appelée écran de masse, obtenue par tressage de fils conducteurs, par exemple des fils de cuivre ;

- une couche de diélectrique 106 disposée entre l'âme conductrice 102 et la couche de blindage 104, et réalisée en une matière plastique électriquement non conductrice ; et
- une enveloppe 108 de protection, autrement appelée gaine de protection, disposée autour de la couche de blindage 104 pour protéger le câble contre les dégradations extérieures.

Chaque extrémité de la couche de blindage 104 est connectée à la structure de caisse 110 constituant la masse électrique du train, par deux connexions électriquement conductrices 112 et 114.

Le modèle électrique équivalent de cet assemblage est un condensateur de valeur C1 positionné entre l'âme conductrice 102 et la couche de blindage, disposé en série avec un condensateur de valeur C2, positionné entre la couche de blindage 104 et la structure de caisse 110 constituant la masse électrique du train.

Le condensateur de valeur C1 modélise la capacité linéique du câble 100 et est fonction des caractéristiques géométriques de la ligne de toiture. Le condensateur C2 est fonction de la pose du câble 100 et plus précisément, de la ligne de toiture 100.

La FIGURE 2 est une représentation schématique du circuit électrique équivalent de l'assemblage de la FIGURE 1 dans une infrastructure ferroviaire.

Plus précisément, le circuit électrique 200 représenté sur la FIGURE 2, modélise une infrastructure ferroviaire dans laquelle un train, roulant sur des rails, est relié à une sous-station alimentant le train par l'intermédiaire d'une caténaire.

Le circuit électrique 200 comprend un élément 202, sous la forme d'un générateur de signal électrique, modélisant la sous-station fournissant le signal d'alimentation haute tension. Chaque extrémité du générateur 202 est reliée à un circuit électrique 204 modélisant le train, par une impédance 206 modélisant la caténaire et une autre impédance 208 modélisant le ou les rails.

Le circuit électrique 204 modélisant le train comprend des impédances 210 et 212, montées en parallèle, et modélisant chacune une motrice du train, ce dernier en comprenant uniquement deux sur la FIGURE 2. Bien entendu le train peut comprendre un nombre différent de motrices.

En parallèle avec chacune des impédances 210 et 212, le circuit électrique 204 modélisant le train comprend une capacité 214 modélisant la ligne de toiture 100, et plus précisément les capacités C1 et C2 décrits plus haut.

Cette capacité 214, et plus particulièrement la capacité linéique C1 de la ligne de toiture 100 (câble 100) de la FIGURE 1, forme un circuit LC résonnant avec l'inductance équivalente 206 de l'infrastructure électrique. La fréquence de résonance du circuit LC dépend de la valeur de l'inductance 206 et de la capacité 214.

Le circuit LC résonnant introduit une résonance électrique dont la fréquence varie, par exemple entre 9kHz à 17kHz, en fonction de la position du train par rapport à la sous-station. En effet, la valeur de l'inductance équivalente 206 de l'infrastructure est directement liée à la longueur de la caténaire et par conséquent à la position du train par rapport à la sous-station. La valeur de la capacité linéique de la ligne de toiture 100 est constante puisque, les dimensions géométriques de la ligne de toiture 100 ne varient pas. La fréquence de résonance électrique du circuit LC est donc directement liée à la valeur de l'inductance 206 et de la capacité 214. Quand l'inductance 206 varie la valeur de la fréquence de résonance du filtre LC varie également.

Par exemple, sous caténaire monophasée transportant un signal de tension 25kV à 50Hz ou de tension 15kV à 16,7Hz, les trains pourvus de convertisseurs de type Pont Monophasé à Commutation Forcée génèrent des harmoniques de courant de l'ordre de quelques dizaines de milliampères à des fréquences proches de la fréquence de résonance détaillée précédemment. Ces harmoniques, circulant dans la boucle « train/rail/sous-station/caténaire », sont amplifiées par le circuit résonnant LC et atteignent des valeurs de plusieurs centaines de milliampères. Ces centaines de milliampères circulent dans le rail, et sont susceptibles de perturber des équipements d'infrastructure, tels que par exemple des circuits de voie.

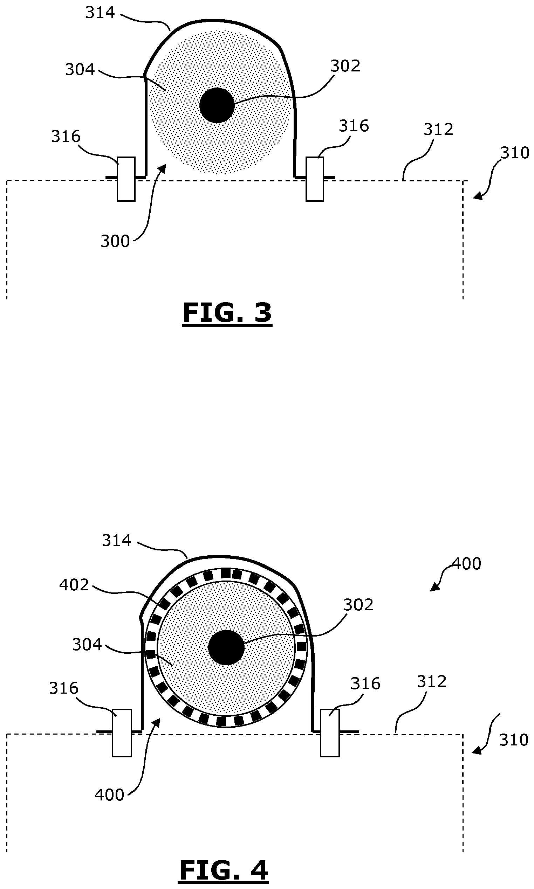

La FIGURE 3 est une représentation schématique d'un premier mode de réalisation d'un câble électrique selon l'invention utilisé comme ligne de toiture dans un train.

Le câble électrique 300 représenté sur la FIGURE 3 est une ligne de toiture d'un train pour alimenter ledit train à partir d'une caténaire (non représentée) reliée à une sous-station fournissant le signal électrique.

Le câble 300 comprend une âme conductrice 302, réalisée par exemple un fil en cuivre.

Le câble 300 comprend en outre une couche isolante 304 déposée autour de l'âme conductrice 302. La couche isolante 304 est réalisée en un matériau diélectrique, tel que par exemple du plastique.

Le câble 300 ne comporte pas de couche de blindage contrairement au câble 100 de la FIGURE 1. Par conséquent, le circuit électrique équivalent obtenu avec le câble 300 ne comporte pas de capacité C1 ou de capacité C2, contrairement au câble 100 de la FIGURE 1.

Le câble électrique 300 est utilisé pour alimenter un train 310, représenté de manière très schématique sur la FIGURE 3.

Le câble électrique 300 est agencé sur une paroi supérieure, ou le toit, 312 du train 310.

Le train 310 est équipé d'un capot 314 positionné au-dessus du câble 300. Le capot 314 est réalisé par pliage d'une feuille d'acier.

Le capot 314 est muni de vis de fixation 316 sur chacune de ses bordures latérales pour le fixer sur le toit 312 du train.

Le capot 314 a une double fonction. D'une part, il protège le câble 300 contre les agressions extérieures. D'autre part, il joue le rôle d'une couche de blindage pour le câble 300.

La FIGURE 4 est une représentation schématique d'un deuxième mode de réalisation d'un câble électrique selon l'invention utilisé comme ligne de toiture dans un train.

Le câble 400 représenté sur la FIGURE 4 comporte tous les éléments du câble 300 de la FIGURE 3, à savoir l'âme conductrice 302 et la couche isolante 306.

En plus, le câble 400 comporte une gaine de protection 402, également isolante, pour protéger la couche isolante et l'âme conductrice et pour améliorer la tenue mécanique du câble 400 aux sollicitions mécaniques.

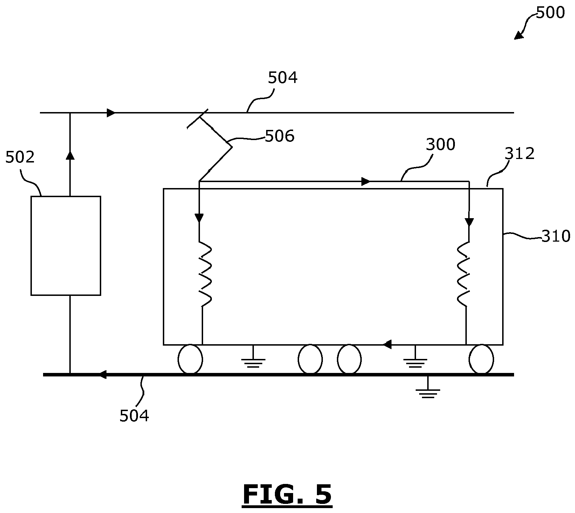

La FIGURE 5 est une représentation schématique d'une infrastructure ferroviaire mettant en oeuvre un équipement ferroviaire selon l'invention muni d'un câble selon l'invention, faisant office de ligne de toiture de l'équipement ferroviaire.

L'installation 500 représentée sur la FIGURE 5 est une installation ferroviaire pour alimenter un équipement ferroviaire, qui peut être le train 310 par exemple.

Le train 310 est alimenté par un signal haute tension de 25 kV fourni par une sous-station 502 reliée au train 310 par une ligne haute tension, telle qu'une caténaire 504, reliant la sous-station 502 au train 310.

Le train 310 est connecté à la caténaire 504 par l'intermédiaire d'un pantographe 506 et d'une ligne de toiture, par exemple réalisée avec le câble 300 de la FIGURE 3. Alternativement, la ligne de toiture peut être le câble 400 de la FIGURE 4.

Bien entendu l'invention n'est pas limitée aux exemples qui viennent d'être décrits. Par exemple, l'équipement ferroviaire n'est pas forcément un train, mais peut être un véhicule ferroviaire de type locomotive, motrice, voiture de train ou voiture de tramway. De plus, le câble selon l'invention peut être disposé sur un équipement ferroviaire sans utilisation d'un capot de protection 314. Dans ce cas, le câble selon l'invention peut être disposé sur un équipement ferroviaire en utilisant des moyens de fixation différents du capot de protection 314, tels que par exemples des bagues de fixation.

## Revendications

**1.** Câble électrique (300;400) pour transporter un signal électrique haute tension d'alimentation d'un équipement ferroviaire (310), en particulier câble de toiture d'un équipement ferroviaire roulant (310), ledit câble (300;400) comprenant :

    - au moins une âme conductrice (302) pour transporter ledit signal électrique, et
    - au moins une couche (304), électriquement isolante, disposée autour de ladite âme conductrice (302) ;

**caractérisé en ce que** ledit câble électrique (300;400) ne comporte pas de couche de blindage.

**2.** Câble (400) selon la revendication précédente, **caractérisé en ce qu'**il comprend en outre une gaine de protection (402), disposée autour de la couche isolante (304).

**3.** Câble (400) selon la revendication précédente, **caractérisé en ce que** la gaine de protection (402) est électriquement non-conductrice ou isolante.

**4.** Utilisation du câble (300;400) selon l'une quelconque des revendications précédentes, pour transporter un signal électrique, pour alimenter un équipement ferroviaire (310).

**5.** Equipement ferroviaire (310) muni d'un câble électrique (300;400) selon l'une quelconque des revendications 1 à 3, pour transporter un signal d'alimentation haute-tension dudit équipement (310).

**6.** Equipement (310) selon la revendication précédente, **caractérisé en ce qu'**il comprend un capot de protection (314), disposé autour dudit câble (300;400), et fixé audit équipement (310).

**7.** Equipement (310) selon la revendication précédente, **caractérisé en ce que** le capot de protection (314) est réalisé en un matériau électriquement conducteur.

**8.** Equipement (310) selon l'une quelconque des revendications 6 ou 7, **caractérisé en ce que** le capot de protection (314) est réalisé en acier.

**9.** Equipement (310) selon l'une quelconque des revendications 6 à 8, **caractérisé en ce que** le capot de protection (314) comporte au moins un moyen de fixation (316) dudit capot (314) sur ledit équipement (310).

**10.** Equipement (310) selon l'une quelconque des revendications 5 à 9, **caractérisé en ce qu'**il s'agit d'une locomotive, d'une motrice, d'une voiture ferroviaire, d'une voiture de train ou d'une voiture de tramway, en particulier alimenté par une caténaire.

**FIG. 1 : ART ANTERIEUR**

**FIG. 2 : ART ANTERIEUR**

**FIG. 3**

**FIG. 4**

**FIG. 5**

Europäisches
Patentamt

European
Patent Office

Office européen
des brevets

**RAPPORT DE RECHERCHE EUROPEENNE**

Numéro de la demande

EP 16 20 0917

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 2 811 490 A1 (SOCIÉTÉ NATIONALE DES CHEMINS DE FER FRANÇAIS SNCF [FR]) 10 décembre 2014 (2014-12-10) * revendication 1; figures 1,3a * ----- | 1-10 | INV. H01B9/00 |
| Y | US 2010/097023 A1 (NAKAMURA MASANOBU [JP] ET AL) 22 avril 2010 (2010-04-22) * alinéa [0001] - alinéa [0002] * ----- | 1-10 | |
| A,D | EP 1 126 573 A2 (SIEMENS AG [DE]) 22 août 2001 (2001-08-22) * abrégé * ----- | 1 | |

DOMAINES TECHNIQUES
RECHERCHES (IPC)

H01B
B60L

Le présent rapport a été établi pour toutes les revendications

| Lieu de la recherche | Date d'achèvement de la recherche | Examinateur |
|---|---|---|
| La Haye | 21 février 2017 | Salm, Robert |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

........................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 20 0917

21-02-2017

| Document brevet cité au rapport de recherche | | Date de publication | Membre(s) de la famille de brevet(s) | | Date de publication |
|---|---|---|---|---|---|
| EP 2811490 | A1 | 10-12-2014 | EP<br>FR | 2811490 A1<br>3006496 A1 | 10-12-2014<br>05-12-2014 |
| US 2010097023 | A1 | 22-04-2010 | CN<br>CN<br>DE<br>JP<br>US<br>WO | 101523514 A<br>102130652 A<br>112007002331 T5<br>5061114 B2<br>2010097023 A1<br>2008041708 A1 | 02-09-2009<br>20-07-2011<br>22-10-2009<br>31-10-2012<br>22-04-2010<br>10-04-2008 |
| EP 1126573 | A2 | 22-08-2001 | EP<br>ES | 1126573 A2<br>2349454 T3 | 22-08-2001<br>03-01-2011 |

EPO FORM P0460

**EP 3 182 420 A1**

**RÉFÉRENCES CITÉES DANS LA DESCRIPTION**

**Documents brevets cités dans la description**

- EP 1126573 A